# EUROPÄISCHE PATENTSCHRIFT

(11) **EP 2 702 340 B1**
(45) Veröffentlichungstag und Bekanntmachung des Hinweises auf die Patenterteilung: **08.07.2015**
(21) Anmeldenummer: 12718940.5
(22) Anmeldetag: 23.04.2012
(51) Int. Cl.: F25D 29/00, F25D 11/02, F25B 5/04

(54) **EINKREIS-KÄLTEGERÄT**
SINGLE-CYCLE REFRIGERATION APPLIANCE
APPAREIL DE FROID À CIRCUIT UNIQUE

(30) Priorität: 29.04.2011 DE 102011075004
(43) Veröffentlichungstag der Anmeldung: 05.03.2014
(73) Patentinhaber: BSH Hausgeräte GmbH, 81739 München (DE)
(72) Erfinder: IHLE, Hans, 89537 Giengen (DE); NUIDING, Wolfgang, 89537 Giengen (DE)
(86) Internationale Anmeldenummer: PCT/EP2012/057363
(87) Internationale Veröffentlichungsnummer: WO 2012/146556

(56) Entgegenhaltungen:
- EP-A2- 1 813 897
- WO-A1-2006/124004
- WO-A2-2010/133506

## Beschreibung

Die vorliegende Erfindung betrifft ein Kältegerät, insbesondere ein Haushaltskältegerät, mit einem Kältemittelkreislauf, in dem ein Verdichter mit wenigstens zwei Verdampfern verbunden ist, die jeweils unterschiedlich temperierten Lagerfächern zugeordnet sind. Die Verdampfer können in dem Kältemittelkreislauf parallel geschaltet sein, und ein Wegeventil kann vorgesehen sein, um je nachdem, in welchem der Lagerfächer Kühlungsbedarf besteht, einen der beiden Verdampfer mit Kältemittel zu versorgen. Im Gegensatz dazu sind bei den sogenannten Einkreis-Kältegeräten die beiden Verdampfer in Reihe miteinander verbunden, so dass vom Verdichter kommendes Kältemittel zunächst den ersten Verdampfer und anschließend den zweiten Verdampfer durchläuft. Da derartige Kältegeräte kein Wegeventil zum Steuern des Kältemittelflusses benötigen, sind sie robust und preiswert zu fertigen.

Der Betrieb des Verdichters eines solchen Einkreis-Kältegerätes ist üblicherweise anhand eines Temperaturfühlers geregelt, der in dem vom zweiten Verdampfer gekühlten Lagerfach angeordnet ist. Wenn dieser Temperaturfühler Kühlbedarf feststellt, dann zirkuliert Kältemittel auch durch den ersten Verdampfer, unabhängig davon, ob dessen Lagerfach tatsächlich Kühlbedarf hat oder nicht. Damit trotz fehlender Regelung das erste Lagerfach eine geeignete Temperatur annimmt, müssen die Abmessungen der Verdampfer und der Lagerfächer, die Isolationsstärke der Lagerfächer, der Kältemittelmassestrom, die absolute Verdichterlaufzeit und andere Parameter genau aufeinander abgestimmt sein. Doch auch eine sorgfältige Abstimmung ermöglicht einen befriedigenden Betrieb nur innerhalb eines engen Intervalls von Umgebungstemperaturen. Ist die Umgebungstemperatur zu hoch, dann steigt der Kühlbedarf des wärmeren Lagerfachs prozentual schneller als der des kälteren, so dass, wenn der Temperaturfühler in dem wärmeren Fach angeordnet ist, die Temperatur des kälteren unter den Sollbereich abfällt. Eine unnötig starke Kühlung führt jedoch zu erhöhtem Energiebedarf. Ist hingegen die Umgebungstemperatur zu niedrig, dann sinkt der Kühlungsbedarf des wärmeren Fachs stärker als der des kälteren. Die Folge kann eine unzureichende Kühlung des kälteren Fachs sein, wodurch die Haltbarkeit des Kühlguts darin beeinträchtigt werden kann.

Eine seit langem bekannte Lösung dieses Problems ist die sogenannte Winterschaltung. Mit ihr kann ein Benutzer zwischen einem normalen Betriebsmodus und einen Betriebsmodus für kalte Umgebungen umschalten. Im letzteren Betriebsmodus läuft im wärmeren Lagerfach eine Heizung, die dazu führt, dass der Temperaturfühler dieses Fachs häufiger Kühlbedarf meldet, als ohne die Heizung der Fall wäre. So läuft der Verdichter häufig genug, um auch eine ausreichende Kühlung des kälteren Fachs zu bewirken. Der Wirkungsgrad des Kältegerätes ist jedoch durch die zusätzliche Heizung erheblich beeinträchtigt.

Aus DE 10 064 318 A1 ist ein Kältegerät bekannt, das einen Kältemittelkreislauf, in dem ein Verdichter mit wenigstens einem ersten Verdampfer, der einem kalten Lagerfach zugeordnet ist, und einem dem ersten Verdampfer in Reihe nachgeschalteten, einem warmen Lagerfach zugeordneten zweiten Verdampfer verbunden ist, und eine Steuerschaltung umfasst, die mit einem ersten Temperaturfühler des warmen Lagerfachs verbunden ist, um den Verdichter einzuschalten, wenn die von dem ersten Temperaturfühler erfasste Temperatur einen Grenzwert überschreitet. Wenn ein zweiter Temperaturfühler am kälteren Lagerfach Kühlbedarf feststellt, dann wird der Verdichter für kurze Zeit eingeschaltet, so dass flüssiges Kältemittel zwar in den im Kältemittelkreislauf stromaufwärts gelegenen Verdampfer des kälteren Lagerfachs gelangt, nicht aber in dem stromabwärts gelegenen Verdampfer des wärmeren Lagerfachs. Auf diese Weise kann die Kühlwirkung im Wesentlichen auf dasjenige Lagerfach eingeschränkt werden, in dem tatsächlich Kühlbedarf besteht.

Zwar kann so auf die herkömmliche energieineffiziente Beheizung des wärmeren Lagerfachs verzichtet werden, doch führt die Notwendigkeit, einen zweiten Temperaturfühler an dem kälteren Fach zu montieren und mit der Steuerschaltung zu verdrahten, wiederum zu erhöhten Fertigungskosten.

Aus WO 2010/133506 A2 ist ein Kältegerät mit einem Kühlfach, einem Gefrierfach und einem beiden Fächern gemeinsamen Verdampfer bekannt. Um das Problem unzureichender Kühlung des Gefrierfachs bei niedriger Umgebungstemperatur zu beheben, wird vorgeschlagen, einen Verdichter unabhängig von einer gemessenen Fachtemperatur zu betrieben, wenn eine vorgegebene maximale Standzeit des Verdichters erreicht ist. Diese Druckschrift offenbart ein Kältegerät gemäß dem Obergegrift des Anspruchs 1.

Aufgabe der vorliegenden Erfindung ist, ein Einkreis-Kältegerät zu schaffen, das die Möglichkeit bietet, eines seiner Lagerfächer im Bedarfsfall bevorzugt zu kühlen, ohne dafür einen Temperaturfühler an diesem Lagerfach zu benötigen.

Die Aufgabe wird gelöst durch ein Kältegerät mit den Merkmalen des Anspruchs 1.

Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination oder ein Weinlagerschrank.

Zu langen Ausschaltphasen des Verdichters kann es im Wesentlichen nur kommen, wenn die Temperatur in der Umgebung des Kältegerätes niedrig ist. Daher kann, wenn die Zeitspanne seit einem vorhergehenden Ausschalten des Verdichters einen Grenzwert überschritten hat, daraus gefolgert werden, dass die Umgebungstemperatur so niedrig ist, dass eine ausreichende Kühlung des kälteren Lagerfachs allein durch den vom ersten Temperaturfühler gesteuerten Betrieb des Verdichters nicht mehr gewährleistet ist. Indem folglich auch nach einem übermäßig langen Stillstand der Verdichter eingeschaltet wird, kann auch bei niedriger Umgebungstemperatur eine ausreichend tiefe Temperatur im kalten Lagerfach aufrechterhalten werden, ohne dass hierfür eine direkte Messung der Temperatur im kalten Lagerfach erforderlich ist. Daher können mit dem Einbau eines Temperatursensors am kalten Lagerfach verbundene Kosten eingespart werden; die erfindungsgemäß erforderliche Messung der Ausschaltzeitdauer ist im Vergleich dazu wesentlich preiswerter realisierbar, da sie keinerlei Verdrahtung erfordert. Bei Verwendung einer programmierbaren Steuerschaltung, z.B. auf Mikroprozessorgrundlage, ist sie rein programmtechnisch und damit nahezu kostenneutral realisierbar. Indem eine Einschaltphase, die durch eine Überschreitung des Grenzwerts der Ausschaltzeit ausgelöst ist, kürzer ist als eine durch eine Überschreitung des Grenzwerts der Temperatur ausgelöste Einschaltphase, wird erreicht, dass das vom Verdichter umgewälzte flüssige Kältemittel im ersteren Falle im Wesentlichen im ersten Verdampfer verbleibt und somit hauptsächlich der Kühlung des kalten Lagerfachs zugute kommt.

Einer ersten Ausgestaltung zufolge kann die Steuerschaltung eingerichtet sein, eine durch eine Überschreitung des Grenzwertes der Ausschaltzeit ausgelöste Einschaltphase nach einer festgelegten Zeitspanne des Verdichterbetriebs zu beenden. Diese Zeitspanne sollte im Allgemeinen so gewählt sein, dass das in ihr umgewälzte Kältemittelvolumen in etwa dem Fassungsvermögen des ersten Verdampfers entspricht.

Alternativ oder auch in Kombination mit der oben beschriebenen Zeitsteuerung kann die Steuerschaltung auch eingerichtet sein, eine durch eine Überschreitung des Grenzwertes der Ausschaltzeit ausgelöste Einschaltphase zu beenden, wenn an einem Temperaturfühler des warmen Lagerfachs eine erste Temperaturabnahme erfasst wird. Diese erste Temperaturabnahme kann sehr gering sein, vorzugsweise sollte der Verdichter sofort ausgeschaltet werden, sobald unter Berücksichtigung der Erfassungsgenauigkeit des Temperaturfühlers eine fallende Tendenz der Temperatur sicher erkennbar ist. Dies gilt insbesondere dann, wenn, einer einfachen Ausgestaltung zufolge, der in Rede stehende Temperaturfühler der oben erwähnte erste Temperaturfühler ist und dieser nicht in unmittelbaren Kontakt mit dem Verdampfer des zweiten Lagerfachs angeordnet ist, denn in einem solchen Fall wird der erste Temperaturfühler erst dann eine Temperaturabnahme erkennen, wenn flüssiges Kältemittel auf dem zweiten Verdampfer erreicht hat.

Wenn in an sich bekannter Weise die Steuerschaltung eingerichtet ist, eine durch Überschreitung des Grenzwertes der Temperatur ausgelöste Einschaltphase bei Erfassung einer zweiten Temperaturabnahme am ersten Temperatursensor zu beenden, dann sollte die erste Temperaturabnahme zumindest deutlich schwächer als die zweite sein, um sicherzustellen, dass im Falle eines Einschaltens des Verdichters wegen Zeitgrenzwertüberschreitung die verfügbare Kühlleistung überwiegend dem kalten Lagerfach zugute kommt.

Vorzugsweise sollte der Temperaturfühler, der die Beendigung der Einschaltphase auslöst, ein am Verdampfer des warmen Lagerfachs angeordneter zweiter Temperaturfühler sein. Dieser erfasst das Eintreffen von flüssigem Kältemittel am Verdampfer wesentlich schneller als der am warmen Lagerfach beabstandet vom Verdampfer angeordnete erste Temperaturfühler und erlaubt es, die Menge des am zweiten Verdampfer ankommenden flüssigen Kältemittels zu minimieren. Die Kosten eines solchen zweiten Temperaturfühlers sind geringer als die eines Temperaturfühlers am kalten Lagerfach, zum einen weil ein gemeinsamer Kabelbaum für ersten und zweiten Temperaturfühler verwendet werden kann, und zum anderen, weil ein solcher Temperaturfühler am Verdampfer bei vielen herkömmlichen Einkreis-Kältegeräten ohnehin vorgesehen ist, um mit seiner Hilfe ein Vereisen des Verdampfers zu verhindern.

Weitere Merkmale und Vorteile der Erfindung werden deutlich anhand der nachfolgenden Beschreibung von Ausführungsbeispielen unter Bezugnahme auf die beigefügten Figuren. Aus dieser Beschreibung und den Figuren gehen auch Merkmale der Ausführungsbeispiele hervor, die nicht in den Ansprüchen erwähnt sind. Solche Merkmale können auch in anderen als den hier spezifisch offenbarten Kombinationen auftreten. Die Tatsache, dass mehrere solche Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können; stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt. Es zeigen:
- Fig. 1: einen schematischen Querschnitt durch ein Haushaltskältegerät gemäß einer ersten Ausgestaltung der Erfindung;
- Fig. 2: ein Flussdiagramm eines von einer Steuerschaltung des Kältegerätes ausgeführten Arbeitsverfahrens;
- Fig. 3: einen schematischen Querschnitt durch ein Haushaltskältegerät gemäß einer zweiten Ausgestaltung der Erfindung; und
- Fig. 4: ein Flussdiagramm eines von der Steuerschaltung des Kältegerätes der Fig. 3 ausgeführten Arbeitsverfahrens.

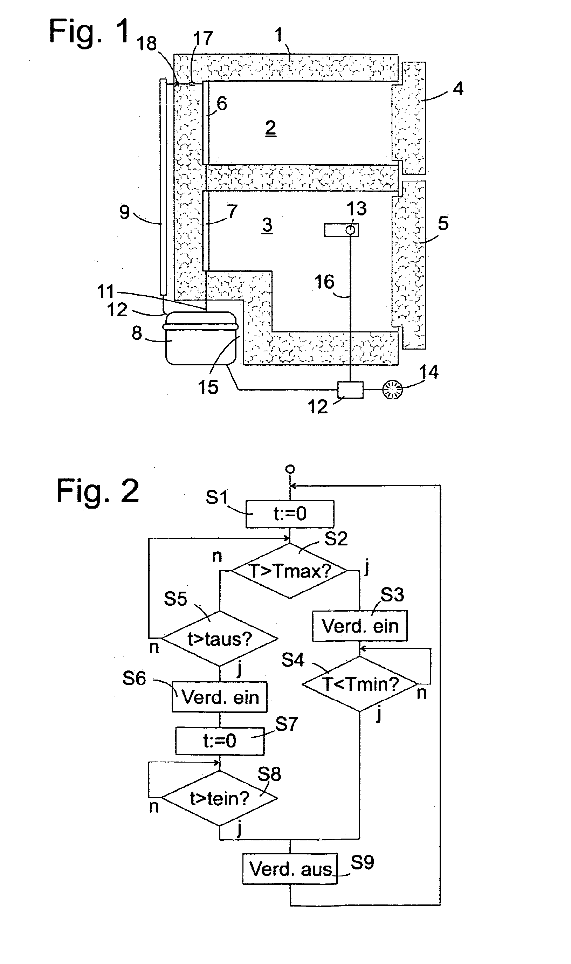

Das Gehäuse des in Fig. 1 schematisch dargestellten Kältegerätes umfasst einen Korpus 1 mit zwei unterschiedlich temperierten Lagerfächern, z.B. einem Gefrierfach 2 als kaltem Fach und einem Normalkühlfach 3 als warmem Fach. An dem Korpus 1 sind Türen 4, 5 zum Verschließen der Fächer 2, 3 angelenkt. An einer Rückwand jedes Fachs 2, 3 sind hier Verdampfer 6, 7 vom Coldwall-Typ dargestellt, doch könnten auch No-frost-Verdampfer vorgesehen sein, ohne das dies wesentliche Änderungen an den im Folgenden noch beschriebenen Besonderheiten der Erfindung erfordern würde.

Die Verdampfer 6, 7 sind zusammen mit einem Verdichter 8, einem Verflüssiger 9, einer Drosselstelle 17 und eventuell einem Absperrventil 18 Teil eines Kältemittelkreislaufs des Kältegerätes. Zwischen einem Druckanschluss 10 und einem Sauganschluss 11 der Verdichters 8 sind der Verflüssiger 9, die Drosselstelle 17, der Verdampfer 6 des Gefrierfachs 2 und der Verdampfer 7 des Normalkühlfachs 3 in Reihe verbunden, so dass flüssiges Kältemittel aus dem Verflüssiger 9 nur durch die Drosselstelle 17 und den Verdampfer 6 hindurch zum Verdampfer 7 gelangen kann. Das Absperrventil 18 ist an den Verdichter 8 gekoppelt und genau dann offen, wenn der Verdichter eingeschaltet ist. Indem das Absperrventil 18 in den Ausschaltphasen des Verdichters 8 sperrt, bleibt ein hoher Druck im Verflüssiger 9 auch während der Ausschaltphasen erhalten, so dass sofort nach dem Einschalten flüssiges Kältemittel am Ausgang der Drosselstelle 17 verfügbar ist.

Eine elektronische Steuerschaltung 12, vorzugsweise auf Mikroprozessorgrundlage, ist mit einem am Normalkühlfach 3 angeordneten Temperaturfühler 13 und einem Zeitgeber 14 verbunden. Der Zeitgeber 14 umfasst einen Oszillator, z.B. einen Schwingquarz, der einen Systemtakt für den Mikroprozessor liefert. Mittel zum Ableiten eines quantitativen Zeitsignals vom Systemtakt sind vorzugsweise durch eine Programmroutine des Mikroprozessors gebildet, welche Taktimpulse des Oszillators zählt und ein für die Zahl der gezählten Impulse repräsentatives digitales Signal ausgibt.

Die Steuerschaltung 12 kann zusammen mit dem Temperaturfühler 13 in einer Schalter-Beleuchtungs-Baugruppe an einer Innenwand des Normalkühlfachs 3 eingebaut sein oder außerhalb der Fächer 2, 3, z.B. benachbart zum Verdichter 8 in einem Maschinenraum 15 des Kältegerätes untergebracht und mit dem Temperaturfühler 13 über einen Kabelbaum 16 verbunden sein.

Fig. 2 veranschaulicht ein Arbeitsverfahren der Steuerschaltung 12. Das Verfahren wird zyklisch wiederholt, so dass die Festlegung eines Verfahrensschritts als Anfangsschritt im Prinzip willkürlich ist. Hier ist als Anfangsschritt der Schritt S1 des Rücksetzens des Zeitgebers 14 auf Null nach dem Ausschalten des Verdichters 8 gewählt. In Schritt S2 wird die vom Temperaturfühler 13 erfasste Temperatur T des Normalkühlfachs 3 mit einem vom Benutzer eingestellten Einschaltschwellwert Tmax verglichen. Wenn dieser Schwellwert überschritten ist, verzweigt das Verfahren zu Schritt S3, in dem der Verdichter 8 eingeschaltet wird. Anschließend verharrt die Steuerschaltung 12 solange beim Schritt S4, bis die im Normalkühlfach gemessene Temperatur eine Ausschaltschwelle Tmin unterschreitet. Sobald dies der Fall ist, wird in Schritt S9 der Verdichter 8 wieder ausgeschaltet und das Verfahren kehrt zum Ausgangspunkt zurück.

Wenn hingegen in Schritt S2 die Einschalttemperatur Tmax noch nicht erreicht ist, geht das Verfahren über zu Schritt S5 und fragt den Zeitmesswert t des Zeitgebers 14 ab. Solange dieser kleiner ist als eine maximal zulässige Ausschaltzeitspanne taus, kehrt das Verfahren zu Schritt S2 zurück. So werden die Schritte S2, S5 so lange zyklisch wiederholt, bis entweder die Einschalttemperatur Tmax oder die maximal zulässige Ausschaltzeitspanne taus erreicht ist.

Wenn die maximal zulässige Ausschaltzeitspanne taus überschritten ist, wird unabhängig vom Wert der Temperatur im Normalkühlfach 3 im Schritt S6 der Verdichter 8 eingeschaltet, und der Zeitgeber 14 wird in Schritt S7 zurückgesetzt. Anschließend wird in Schritt S8 der Zeitgeber 8 überwacht, bis die von ihm gemessene Zeit t eine maximal zulässige Einschaltzeitspanne tein erreicht. Sobald dies der Fall ist, schaltet die Steuerschaltung 12 in Schritt S9 den Verdichter 8 aus, und das Verfahren kehrt zum Ursprung S1 zurück.

Die Zeit tein ist in Abhängigkeit vom Durchsatz des Verdichter 8 und dem Fassungsvermögen des Verdampfers 6 so gewählt, dass sie soeben ausreicht, um den Inhalt des Verdampfers 6 auszutauschen. D.h. zum Einschaltzeitpunkt des Verdichters 8 im Verdampfer 6 enthaltener Kältemitteldampf wird verdrängt und durch wenigstens zum Teil flüssiges Kältemittel aus dem Verflüssiger 9 ersetzt. Der Zustrom des verdrängten Kältemitteldampfs mit Gefrierfachtemperatur zum Verdampfer 7 des Normalkühlfachs 3 hat dort keine nennenswerte Kühlwirkung. Das Gefrierfach 2 wird hingegen wirksam gekühlt, da das flüssige Kältemittel nach Ausschalten des Verdichters 8 im Verdampfer 6 verbleibt und dort verdunstet.

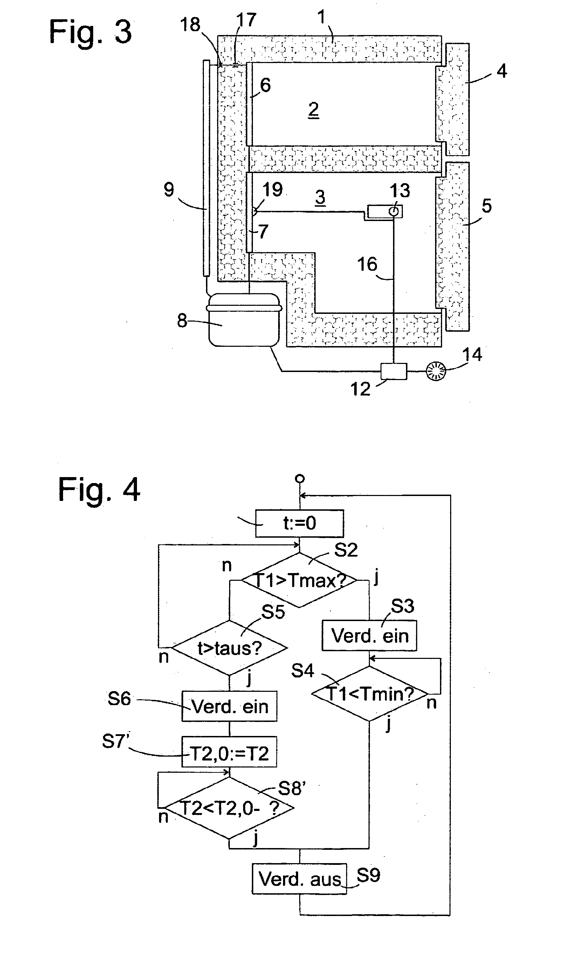

Das in Fig. 3 gezeigte Kältegerät unterscheidet sich von demjenigen der Fig. 1 durch einen zweiten Temperaturfühler 19, der am Verdampfer 7 des Normalkühlfachs 3 angeordnet ist und über einen Zweig des Kabelbaums 16 mit der Steuerschaltung 12 verbunden ist. Herkömmlicherweise und auch im Rahmen der vorliegenden Erfindung kann der Temperaturfühler 19 dazu dienen, eine Abkühlung des Verdampfers 7 auf 0°C zu erfassen und in diesem Fall den Verdichter 8 auszuschalten, um zu verhindern, dass sich eine die Effizienz des Verdampfers 7 beeinträchtigende Eisschicht auf diesem bildet. Im Falle eines Nofrost-Verdampfers kann eine Abkühlung unter 0°C zugelassen werden; in diesem Fall kann der Temperaturfühler 19 dazu dienen, eine Abtauheizung des Verdampfers 7 auszuschalten, sobald ein Temperaturanstieg über 0°C die vollständige Beseitigung des darauf abgelagerten Eises anzeigt.

Die Bedeutung des Temperaturfühlers 19 im Rahmen der vorliegenden Erfindung wird deutlich anhand des Flussdiagramms der Fig. 4, das ein Arbeitsverfahren der Steuerschaltung 12 des Kältegerätes aus Fig. 3 darstellt. Die Schritte S1 bis S6 sind dieselben wie mit Bezug auf Fig. 2 beschrieben; wobei das Symbol T1 in Fig. 4 genauso wie das Symbol T in Fig. 2 die vom Temperaturfühler 13 im Normalkühlfach 3 gemessene Temperatur bezeichnet.

Gleichzeitig mit dem Einschalten des Verdichters in Schritt S6 liest die Steuerschaltung 12 in Schritt S7' den Temperaturfühler 19 aus und speichert den von diesem gemessenen Wert der Verdampfertemperatur T2 als T2,0. Anschließend wird in Schritt S8' abgewartet, bis der Temperaturfühler 19 eine Temperatur meldet, die um wenigstens einen kleinen Wert ε niedriger ist als T2,0. Eine solche Temperaturverringerung zeigt das Eintreffen von flüssigem Kältemittel am Verdampfer 7 an und führt zum Ausschalten des Verdichters in Schritt S9. Die Temperaturdifferenz ε ist im Allgemeinen deutlich niedriger als die Differenz zwischen Ein- und Ausschalttemperatur Tmax, Tmin, sodass eine durch Überschreitung der maximal zulässigen Ausschaltzeitspanne taus des Verdichters 8 ausgelöste Betriebsphase des Verdichters 8 kürzer ist als eine durch Überschreitung der Einschalttemperatur Tmax ausgelöste.

Anders als beim Arbeitsverfahren der Fig. 2 ist die Dauer der Einschaltphase bei Überschreitung der maximalen Ausschaltzeitspanne taus jedoch nicht konstant. Wenn zum Zeitpunkt des Schritts S6 noch Reste von flüssigem Kältemittel im Verdampfer 6 vorhanden sind, der Kühlbedarf des Gefrierfachs 2 also gering ist, dann ist auch die Zeitspanne kurz, die verstreicht, bis in Schritt S8' die Abkühlung des Verdampfers 7 festgestellt wird. So passt sich die Dauer der Einschaltphase zwischen Schritt S6 und Schritt S9 automatisch dem Kältebedarf des Gefrierfachs 2 an, obwohl keinerlei Temperaturmessung im Gefrierfach 2 stattfindet. Die maximale Ausschaltzeitspanne taus kann daher kürzer gewählt werden als bei der Ausgestaltung der Fig. 1 und 2, ohne dass dies zu einer unnötigen, energiezehrenden Unterkühlung des Gefrierfachs 2 führt.

## Patentansprüche

1. Kältegerät, insbesondere Haushaltskältegerät, mit einem Kältemittelkreislauf, in dem ein Verdichter (8) mit wenigstens einem ersten Verdampfer (6) verbunden ist, und einer Steuerschaltung (12), die mit einem ersten Temperaturfühler (13) eines warmen Lagerfachs (3) verbunden ist, um den Verdichter (8) einzuschalten, wenn die von dem ersten Temperaturfühler (13) erfasste Temperatur (T; T1) einen Grenzwert (Tmax) überschreitet, und die Steuerschaltung (12) ferner eingerichtet ist, den Verdichter (8) einzuschalten, wenn die Zeitspanne seit einem vorhergehenden Ausschalten des Verdichters (8) einen Grenzwert (taus) überschreitet, **dadurch gekennzeichnet, dass** der erste Verdampfer (6) einem kalten Lagerfach (2) zugeordnet ist und ein dem ersten Verdampfer (6) in Reihe nachgeschalteter, zweiten Verdampfer (7) dem warmen Lagerfach (3) zugeordnet ist, und eine Einschaltphase (S6-S9), die durch eine Überschreitung des Grenzwerts (taus) der Ausschaltzeit ausgelöst (S5, S6) ist, kürzer ist als eine durch eine Überschreitung des Grenzwerts der Temperatur (Tmax) ausgelöste (S2, S3) Einschaltphase.

2. Kältegerät nach Anspruch 1, **dadurch gekennzeichnet, dass** die Steuerschaltung (12) eingerichtet ist, eine durch eine Überschreitung des Grenzwerts (taus) der Ausschaltzeit ausgelöste (S5, S6) Einschaltphase nach einer festgelegten Zeitspanne (tein) zu beenden (S9).

3. Kältegerät nach einem der vorhergehenden Ansprüche, **dadurch gekennzeichnet, dass** die Steuerschaltung (12) eingerichtet ist, eine durch eine Überschreitung des Grenzwerts (taus) der Ausschaltzeit ausgelöste (S6, S6) Einschaltphase bei Erfassung (S8') einer ersten Temperaturabnahme (ε) an einem Temperaturfühler (19) des warmen Lagerfachs (3) zu beenden.

4. Kältegerät nach Anspruch 3, **dadurch gekennzeichnet, dass** die die Steuerschaltung (12) eingerichtet ist, eine durch eine Überschreitung des Grenzwerts (Tmax) der Temperatur ausgelöste (S2, S3) Einschaltphase bei Erfassung einer zweiten Temperaturabnahme (Tmax-Tmin) am ersten Temperatursensor (13) zu beenden, wobei die erste Temperaturabnahme (ε) schwächer als die zweite (Tmax-Tmin) ist.

5. Kältegerät nach Anspruch 3 oder 4, **dadurch gekennzeichnet, dass** der Temperaturfühler (19), der die Beendigung (S9) der Einschaltphase auslöst, ein am Verdampfer (7) des warmen Lagerfachs (3) angeordneter zweiter Temperaturfühler (19) ist.

6. Kältegerät nach einem der vorhergehenden Ansprüche, **dadurch gekennzeichnet, dass** in dem Kältemittelkreis ein Absperrventil (18) zwischen einem Verflüssiger (9) und den Verdampfern (6, 7) angeordnet ist.

## Claims

1. Refrigeration appliance, especially household refrigeration appliance, with a refrigerant circuit in which a compressor (8) is connected to at least one first evaporator (6), and a control circuit (12), which is connected to a first temperature sensor (13) of a warm storage compartment (3) in order to switch on the compressor (8) when the temperature (T; T1) detected by the first temperature sensor (13) exceeds a threshold (Tmax), and the control circuit (12) is further configured to switch on the compressor (8) when the period of time since a preceding switching off of the compressor (8) exceeds a threshold (toff), **characterised in that** the first evaporator (6) is assigned to a cold storage compartment (2) and a second evaporator (7) connected downstream from the first evaporator (6) in series is assigned to the warm storage compartment (3) and a switch-on phase (S6-S9), which is triggered (S5, S6), through the exceeding of the threshold (toff), of the switch-off time, is shorter than a switch-on phase triggered (S2, S3) by the exceeding of the temperature threshold (Tmax).

2. Refrigeration appliance according to claim 1, **characterised in that** the control circuit (12) is configured to end (S9) a switch-on phase triggered (S5, S6) by an exceeding of the threshold (toff) of the switch-off time after a defined period of time (ton).

3. Refrigeration appliance according to one of the preceding claims, **characterised in that** the control circuit (12) is configured to end a switch-on phase triggered (S5, S6) by an exceeding of the threshold (toff) of the switch-off time on detection (S8') of a first decrease in temperature (ε) at a temperature sensor (19) of the warm storage compartment (3).

4. Refrigeration appliance according to claim 3, **characterised in that** the control circuit (12) is configured to end a switch-on phase triggered (S2, S3) by an exceeding of the threshold (Tmax) of the temperature on detection of a second decrease in temperature (Tmax-Tmin) at the first temperature sensor (13), wherein the first decrease in temperature reduction (ε) is less than the second (Tmax-Tmin).

5. Refrigeration device according to claim 3 or 4, **characterised in that** the temperature sensor (19), which triggers the ending (S9) of the switch-on phase, is a second temperature sensor (19) disposed on the evaporator (7) of the warm storage compartment (3).

6. Refrigeration device according to one preceding claims, **characterised in that** a stop valve (18) is disposed in the refrigerant circuit between a condenser (9) and the compressors (6, 7).

## Revendications

1. Appareil frigorifique, notamment appareil frigorifique à usage domestique, comprenant un circuit de réfrigérant dans lequel un compresseur (8) est relié à au moins un premier évaporateur (6), et comprenant un circuit de commande (12) qui est relié à une première sonde de température (13) d'un compartiment de stockage chaud (3) afin de mettre en service le compresseur (8) lorsque la température (T ; T1) enregistrée par la première sonde de température (13) dépasse une valeur limite (Tmax), et le circuit de commande (12) étant en outre configuré pour mettre en service le compresseur (8) lorsque la période de temps depuis une mise hors service précédente du compresseur (8) dépasse une valeur limite (taus), **caractérisé en ce que** le premier évaporateur (6) est attribué à un compartiment de stockage froid (2) et **en ce qu'**un deuxième évaporateur (7) installé en série en aval du premier évaporateur (6) est attribué au compartiment de stockage chaud (3), et **en ce qu'**une phase de mise en service (S6-S9), qui est déclenchée (S5, S6) par un dépassement de la valeur limite (taus) du temps de mise hors service, est plus courte qu'une phase de mise en service déclenchée (S2, S3) par un dépassement de la valeur limite de la température (Tmax).

2. Appareil frigorifique selon la revendication 1, **caractérisé en ce que** le circuit de commande (12) est configuré pour terminer (S9) une phase de mise en service déclenchée (S5, S6) par un dépassement de la valeur limite (taus) du temps de mise hors service après une période de temps déterminée (tein).

3. Appareil frigorifique selon l'une quelconque des revendications précédentes, **caractérisé en ce que** le circuit de commande (12) est configuré pour terminer une phase de mise en service déclenchée (S5, S6) par un dépassement de la valeur limite (taus) du temps de mise hors service lors de l'enregistrement (S8') d'une première diminution de température (ε) sur une sonde de température (19) du compartiment de stockage chaud (3).

4. Appareil frigorifique selon la revendication 3, **caractérisé en ce que** le circuit de commande (12) est configuré pour terminer une phase de mise en service déclenchée (S2, S3) par un dépassement de la valeur limite (Tmax) de la température lors de l'enregistrement d'une deuxième diminution de température (Tmax-Tmin) sur la première sonde de température (13), la première diminution de température (ε) étant plus faible que la deuxième (Tmax-Tmin).

5. Appareil frigorifique selon la revendication 3 ou 4, **caractérisé en ce que** la sonde de température (19) qui déclenche la fin (S9) de la phase de mise en service est une deuxième sonde de température (19) disposée sur l'évaporateur (7) du compartiment de stockage chaud (3).

6. Appareil frigorifique selon l'une quelconque des revendications précédentes, **caractérisé en ce qu'**une vanne d'arrêt (18) est disposée dans le circuit de réfrigérant entre un condenseur (9) et les évaporateurs (6, 7).
